(19) **Europäisches Patentamt / European Patent Office / Office européen des brevets**

(11) **EP 3 609 318 B1**

(12) **EUROPEAN PATENT SPECIFICATION**

(45) Date of publication and mention
of the grant of the patent:
**06.12.2023 Bulletin 2023/49**

(21) Application number: **18723968.6**

(22) Date of filing: **13.04.2018**

(51) International Patent Classification (IPC):
***A01K 61/80*** (2017.01)　　　***A01K 61/95*** (2017.01)

(52) Cooperative Patent Classification (CPC):
**A01K 61/80; A01K 61/95;** Y02A 40/81

(86) International application number:
**PCT/IB2018/052595**

(87) International publication number:
**WO 2018/189724 (18.10.2018 Gazette 2018/42)**

(54) **AUTONOMOUS AQUACULTURE FISH FEEDING SYSTEM AND OPERATION METHOD THEREOF**

AUTONOMES FISCHFÜTTERSYSTEM FÜR AQUAKULTUR UND BETRIEBSVERFAHREN DAFÜR

SYSTÈME AUTONOME D'ALIMENTATION DE POISSONS D'AQUACULTURE ET PROCÉDÉ DE
FONCTIONNEMENT ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2017 PT 2017110028**

(43) Date of publication of application:
**19.02.2020 Bulletin 2020/08**

(73) Proprietors:
- **Universidade do Porto
4099-002 Porto (PT)**
- **CIIMAR - Centro Interdisciplinar de Investigação
Marinha e Ambiental
4450-208 Matosinhos (PT)**
- **Foodintech, Lda
4200-135 Porto (PT)**

(72) Inventors:
- **DE ALMEIDA OZÓRIO, Rodrigo Otávio
4450-208 Matosinhos (PT)**
- **TAINÁ DE SOUZA, Allan
370 05 Ceské Budejovice (CZ)**
- **FERREIRA PEREIRA, Luís Filipe
4465-177 S. Mamede Infesta (PT)**
- **MAGALHÃES GONÇALVES, José Fernando
4050-313 Porto (PT)**
- **CARVALHO ARAÚJO FERNANDES, Miguel
Ângelo
4200-135 Porto (PT)**

(74) Representative: **Patentree
Edificio Net
Rua de Salazares, 842
4149-002 Porto (PT)**

(56) References cited:
**WO-A1-2016/023071**

EP 3 609 318 B1

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

Processed by Luminess, 75001 PARIS (FR)

## Description

## Technical field

The present disclosure relates to an autonomous aquaculture fish feeding system and method, in particular comprising an autonomous vessel having a plurality of temperature and salinity sensors and an electronic data processor configured for calculating a fish weight prediction model from collected temperature and salinity data.

## Background

Global production of farmed fish has increased significantly in the last decades, whereas harvests of wild fish remained somewhat stable (FAO, 2014), with most of the ocean fisheries stocks being now recognized as over or fully exploited (Fisheries, 1999). The human population growth is causing an increased demand for animal protein, which is currently being filled by aquaculture fish (Naylor et al., 2000). However, aquaculture production is causing detrimental effects to the environment. On one hand, it removes resources from wild stocks (Naylor et al., 2000), on the other hand produces organic and inorganic waste from uneaten feed.

The European seabass (*Dicentrarchus labrax*) is one of the most farmed marine fish species in Europe, especially in Mediterranean countries, reaching an annual production of 158,479 tonnes in 2015 (FEAP, 2016). Therefore, seabass farms generate large amount of waste in the environment, mostly due to uneaten feed and sub-optimal feeding strategies adopted by farmers. The use of present disclosure will minimize significantly the feed waste of seabass production facility due to climatic conditions variations.

In fact, fish are poikilothermic, meaning that they are unable to control their body temperature, and appetite varies directly with environmental temperature (Dülger et al., 2012). Empirical and experimental evidence suggests that the temperature range in which seabass may grow are between 15 to 27 ºC, with an optimal temperature of 25ºC (Dülger et al., 2012). Moreover, fish growth in aquaculture systems is highly dependent on food consumption, hence this parameter is crucial for the development of the feed intake predictive system. Food consumption varies with the water temperature; in the case of seabass can reach a maximum of 7.4%/day of the body weight at 18ºC (Russell, Fish, & Wootton, 1996), with an optimal value about 6 %/day wet weight (Russell et al., 1996). Studies show that temperature alone can cause extreme variations on the daily consumption. Person-Le Ruyet, Mahe, Le Bayon, and Le Delliou (2004) reported that juvenile seabass feed intake may vary from 0.8% to 1.6% biomass per day. All within the common set of temperatures for a seabass production (14 - 26 ºC).

Salinity also has been shown to greatly influence feed intake, increasing as salinity decreases. Dendrinos and Thorpe (1985) showed that seabass juvenile kept at 10 psu of salinity demanded nearly twice as much feed as those fish reared at 30 psu.

Pollution, as solid wastes produced from intensive fish farming, comprise mainly leftover feed, representing up to 40 % of the feed offered to fish (Coves, Gasset, Lemarié, & Dutto, 1998). The non-consumed feed generates organic and inorganic loads in aquaculture wastewater, threatening the ecosystem and its biodiversity. This feed waste has both negative economic consequences for the farmer and to the environment (Thorpe & Cho, 1995).

Aquaculture can be performed in open-sea or inland. Automatization targeted for aquaculture, are mainly focused for open sea cages and within these, most depend on man control for operation. Inland ponds have less automatization adaptations and these are usually based on fixed sensors placement and automatic feeders that react to waste detection. These leads to little or none technological solutions for inland specific constraints, one of these is water stratification (Allan, Heasman, & Bennison, 2008; Gavine & Bretherton, 2007; Pritchard, 1952; QUEIROZ, 2006). Inland fish production is specially carried out in salt marches, with serious water (thermal, salinity and chemical) stratification. Nevertheless, reutilized salt marches are common, especially in Mediterranean countries. Their dimensions can vary, and easily can reach twelve thousand square meters, in a 200 m x 20 m x 3 m (Length x wide x depth) profile. Each aquaculture company can have twelve or more fish ponds along 1 or 2 hectares (Dill, 1993).

The knowledge for the correct feeding level is not new. However, the instrumentalisation of this knowledge to the industry has not been accomplished, until now. Patent documents relevant to the present disclosure, aiming to reduce the feed waste include the following:

The patent document US5133287 A, Continuous fish feeding system presents an automated supply system, in which the amount of feed to be allocated is determined by a processor that takes into account the level of dissolved oxygen in the water. However, this predictive model ignores other physical or chemical parameters of the water.

The patent document US6317385 B1, Aquaculture feeding monitor, enables the detection of food waste in the bottom of the fish pond through echolocation. Fish pond (from now one to be presented as pond) is defined as artificial lake or reservoir that is stocked with fish and is used in aquaculture for fish farming. However, solely for the system operator, decide and adjust the quantities of feed. This method therefore requires the initial occurrence of waste, and only then, the operator can adapt the next feeding in order to reduce waste. This methodology does not allow a forecast of consumption, but rather, a reaction to waste detection.

The work from (Lee et al., 2013) entitled: "The Use of Vision in Sustainable Aquaculture Feeding System" presents a system that automatically feeds the fish based on fish appetite. The system has sensors that monitor the pH, turbidity and temperature, but these parameters are not related to the feed dispensing.

The patent document US8825241 B2, Autonomous wave-powered substance distribution vessels for fertilizing plankton, feeding fish, and sequestering carbon from the atmosphere, represents an ecological approach of fertilizing plankton or feeding fish. Although the model may be equipped with sensors for temperature, fluorimeter and others. This device does not possess a self-adjustable trajectory aimed to evaluate the average temperature and salinity in a determined area. Therefore, this device cannot be used to surpass the stratification problematic in variable dimension ponds.

The IPI Singapore company wireless sensor device, named: "Wireless Water Monitoring System for Aquaculture and Environmental Professionals", enables the user to have live measurements for temperature, salinity and other parameters wirelessly. However, this system is fixed, hence failing the stratification question once more.

The Deep Trekker company remote operated vehicles (ROV), models DTG2 and DTX2, are an interesting example of electronic technology applied in aquaculture. However, these devices are not just man controlled and they are cable dependent, since they have no battery.

The work from (Garcia, Sendra, Lloret, & Lloret, 2011) entitled: "Monitoring and control sensor system for fish feeding in marine fish farms" combine data from a variety of sensors to an automatic feeder with dose-dependent algorithm. The feed distributed by the feeder is dependent of the environment conditions, representing a big step in aquaculture automatization. However, this as many others feed dosage algorithms, use environmental conditions as a starting point but then are ultimately limited on waste detection. This is due to the absence of a prediction model, instead it resorts to tabled values for single temperatures at the same salinity and vice versa.

Prior art document WO 2016/023071 A1 discloses an aquatic management system for managing an aquatic ecosystem having a body of water harbouring aquatic animals, comprising: a powered vehicle capable of moving within the body of water; a task implementing system connected to the powered vehicle capable of performing a plurality of tasks pertaining to the management of the aquatic ecosystem; a navigation system capable of guiding the powered vehicle to any location or along any path within the body of water for the task implementing system to implement a management task with respect to the aquatic ecosystem. The task implementing system is capable of performing tasks to obtain information about the ecosystem and, based on that information, cause another task to be performed.

These facts are disclosed in order to illustrate the technical problem addressed by the present disclosure.

References

Allan, G. L., Heasman, H., & Bennison, S. (2008). Development of industrial-scale inland saline aquaculture: Coordination and communication of R&D in Australia: NSW Department of Primary Industries.

Coves, D., Gasset, E., Lemarié, G., & Dutto, G. (1998). A simple way of avoiding feed wastage in European seabass, Dicentrarchus labrax, under self-feeding conditions. Aquatic Living Resources, 11(6), 395-401.

Dendrinos, P., & Thorpe, J. (1985). Effects of reduced salinity on growth and body composition in the European bass Dicentrarchus labrax (L.). Aquaculture (Amsterdam, Netherlands), 49(3), 333-358.

Dill, W. A. (1993). Inland fisheries of Europe: Food & Agriculture Org.

Dülger, N., Kumlu, M., Türkmen, S., Ölçülü, A., Eroldoğan, O. T., Yılmaz, H. A., & Öçal, N. (2012). Thermal tolerance of European Sea Bass (Dicentrarchus labrax) juveniles acclimated to three temperature levels. *Journal of Thermal Biology, 37*(1), 79-82.

FAO. (2014). FAO Yearbook: Fishery Statistics - Capture Production. Retrieved from FEAP (2016). European Aquaculture Production Report 2007-2015), 45 pag.

Fisheries, S. M. (1999). Committee on Ecosystem Management for Sustainable Marine Fisheries. Ocean Studies Board. Commission on Geosciences, Environment, and Resources: Washington, DC: National Academy Press.

Garcia, M., Sendra, S., Lloret, G., & Lloret, J. (2011). Monitoring and control sensor system for fish feeding in marine fish farms. IET communications, 5(12), 1682-1690.

Gavine, F., & Bretherton, M. (2007). Aquaculture in saline groundwater evaporation basins. RI Research, Australien Government, 1-44.

Lee, J.-V., Loo, J.-L., Chuah, Y.-D., Tang, P.-Y., Tan, Y.-C., & Goh, W.-J. (2013). The use of vision in a sustainable aquaculture feeding system. Research Journal of Applied Sciences, Engineering and Technology, 6(19), 3658-3669.

Naylor, R. L., Goldburg, R. J., Primavera, J. H., Kautsky, N., Beveridge, M. C., Clay, J., ... Troell, M. (2000). Effect of aquaculture on world fish supplies. Nature, 405(6790), 1017-1024.

Person-Le Ruyet, J., Mahe, K., Le Bayon, N., & Le Delliou, H. (2004). Effects of temperature on growth and metabolism in a Mediterranean population of European sea bass, Dicentrarchus labrax. Aquaculture (Amsterdam, Netherlands), 237(1), 269-280.

Pritchard, D. W. (1952). Salinity distribution and circulation in the Chesapeake Bay estuarine system. Journal of Marine Research, 11(2), 106-123.

QUEIROZ, J. F. D. Q. (2006). *Recomendações práticas para melhorar a qualidade do água e dos efluentes dos viveiros de aqüicultura*: Embrapa Meio Ambiente.

Russell, N., Fish, J., & Wootton, R. (1996). Feeding and growth of juvenile sea bass: the effect of ration and temperature on growth rate and efficiency. Journal of Fish Biology, 49(2), 206-220.

Thorpe, J., & Cho, C. Y. (1995). Minimising waste through bioenergetically and behaviourally based feeding strategies. Water Science and Technology, 31(10), 29-40.

**General Description**

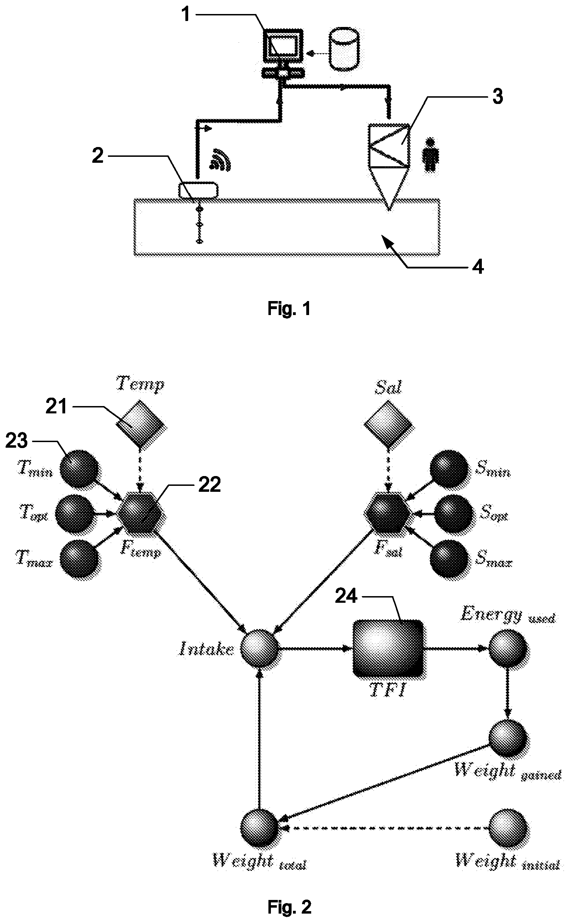

The present disclosure comprises of a technological package that combines a predictive feed intake software with a specific data collection method for environmental parameters. The system is designed in one of its applications for a marine fish, the European seabass (*Dicentrarchus labrax*), with special attention to inland aquaculture facilities. The predictive model is based on two environmental factors that strongly influence feed intake in marine fish, i.e. temperature and salinity. This device has a valuable application in both aquaculture industry and scientific research, since a correct prediction of feed consumption can drastically reduce feed waste, as well as improve fish growth performances. The electronic set-up of the present disclosure is built with several components that can process information obtained from the environmental conditions (temperature and salinity), at predetermined depths, elaborate the feed amount prediction and communicate to the user. As shown in Figure 1, the predictive model built into the device (1) receives information about the environmental temperature and salinity from the sensors disposed at pre-determined depths, fixed at the non-specific floatable vessel (2), the main device then notifies the user and/or automatic feeder (3) the feed amount prediction. The fish stock (4) is then fed with the proper amount, avoiding waste or underfed situations. This procedure is constantly adjusted whenever environmental temperature and salinity changes.

Thus, the combination of temperature and salinity has been found have a specific influence that can define the adequate food amount to be given to fish for the maximum growth performance, with minimum waste. Conversely, if fish are fed with traditional methods, i.e. a daily fix amount, the farmer would have obtained a deficit in growth or increase in pollution due to the lack or excess of feed, respectively.

The present disclosure is based on a technological package that combines a mathematical model that can predict the amount of feed that the fish, for example European seabass (*Dicentrarchus labrax*), should be fed, considering the environmental temperature and salinity, with a specific data collection approach. The prediction is communicated by the main device to the user and/or to the automatic feeder if the current set-up enables it. This approach gains importance as it is perceived the large waste involved in the aquaculture sector due to appetite variations caused by the oscillation of water temperature and salinity.

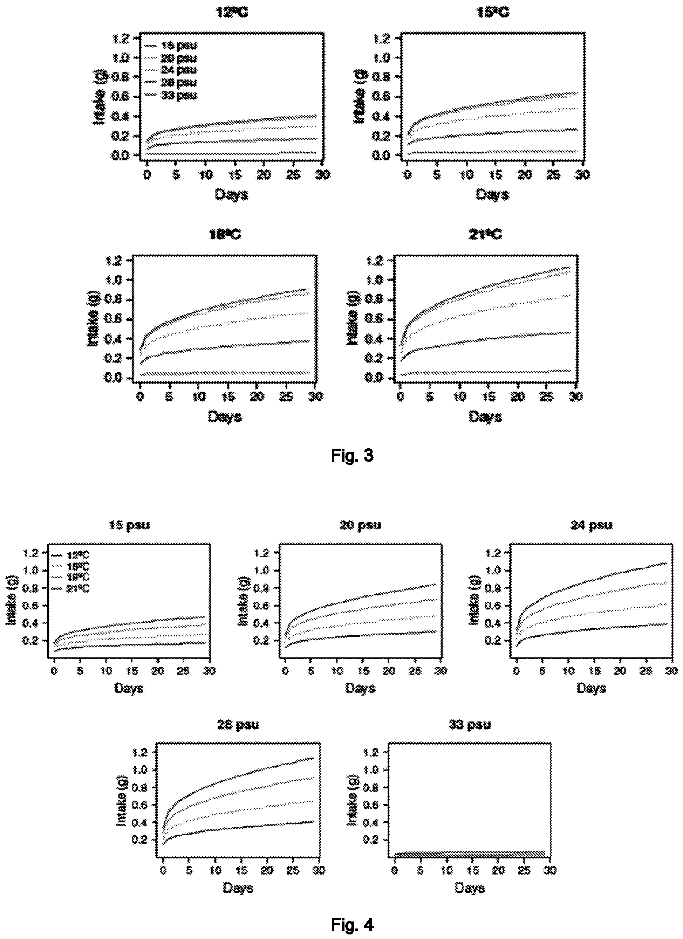

The stratification of the aquaculture water is mostly due to the restricted water access and lack of movement, as these ponds have limited water exchange and conditioned by the sea level. Water conditions can vary significantly, as much as 10 ºC in temperature between top and bottom and 10 ppt in salinity from the water entrance point to the opposite edge (Allan et al., 2008). The presently disclosed parameters collection method approaches the stratification problem. To obtain a better feed prediction, the mathematical model should receive representative values for the pond temperature and salinity, and not just a specific point values. By analysing the fish consumption variation as temperature and/or salinity changes it can be observed that there are significant changes. According to current literature and results obtained by pre-conducted trials, it can be observed oscillations close to 20% of feed dosage (Figure 3 and 4). Therefore, data collection approach plays a major role in feed predictability. To surpass the stratification constraint, the device should circuit around the pond in specific trajectories, adapted to the pond dimensions, while capturing temperature and salinity at different depths, also at adequate and adjustable distances. This methodology allows the main device to collect numerous values for temperature and salinity from different areas and depths of the pond. The main device is then able to elaborate averages that would suit the predictive model much more efficiently than any other specific spot measurements.

Contrary to the equipment mentioned above, the present disclosure enables the farmers to predict the adequate daily feed dosage necessary for their fish ponds, no matter the stratification pattern. This can also be adapted to automatic feeding systems. Conversely, the traditional methods are based either on visual observation during consumption or reactive automatic feeders. The predecessors feeding documents have a high degree of uncertainty, since these do not consider the variation of temperature and salinity that can occur in one single pond. This feature can be highly harmful, as explained before, the variation degree for the two considered parameters for inland fish ponds can implicate of up to 20% misjudge in feed prediction.

The characteristics of the disclosed device differ from the existing approaches in both hardware approach and algorithm. As mentioned in the previous section, the existing sensor devices are usually fixed or part of a submersible man controlled vessel. The disclosed approach relies on a non-specific floatable vessel that interacts with the present disclosure software to autonomously circuit through the pond, carrying sensors for collection of data on temperature and salinity. The sensors should preferably be distributed along a line that prolongs through the vessel (length is adjustable to pond depth). The cable is set to be vertically positioned as the robot moves around the pond.

The trajectory performed by the vessel carries advantages as the average results for temperature and salinity allows a more reliable input and therefore, a more precise feed prediction. The current available products or published studies do not take into consideration the stratification problematic affecting inland aquaculture, neither use wireless floatable robots equipped to measure parameters at different depths. Adding to this, current feed systems prevent waste by detecting ongoing overfeed. While the present system, by prediction, it is prevented waste. The output is a correct feed dosage, neither excess nor deficiency of feed, that is adjusted according to the average temperature and salinity of the fish pond. This is obtained by a predictive mathematical model that was also developed. Other systems use environmental parameters to enable reactive options, always implying some feed waste. The present disclosure solution avoids waste occurrence since it does not depend on the waste detection to adapt the feed dosage. Therefore, the use of prior art may cause an inefficient fish growth, causing an increase in production cost and the fish price and a decrease in the competitiveness of the fish farm.

Considering such, it becomes more noticeable the advantage of the present disclosure when compared to the predecessor's inventions. In conclusion, the application of the present disclosure in commercial farming conditions minimizes food waste and production costs, increase feed efficiency for fish growth and reduce the environmental footprint of aquaculture production.

An embodiment of the disclosure comprises a vessel component together with a main device that can detect environment temperature, salinity and GPS coordinates.

The main device must have knowledge of the initial fish biomass to create a prediction. The vessel component device hardware must preferably contain:

Temperature sensors distributed along the pond to cover different strata of the water. The system will then calculate an average value of temperature in all areas in the hour just after the feeding and use this value as a proxy for the temperature in the pond. The precision of the sensors will be higher than 95%.

Salinity sensors, placed in the same manner as the temperature sensors to cover all regions of the rearing ponds. The precision of the sensors will be higher than 95%.

GPS and WiFi module. These allows the main device to receive environment parameters values and GPS coordinates to determine trajectory.

Main control device, which receives the temperature and salinity results, enables to the user to determine what the current biomass. The device also contains the predictive algorithm and produces as an output the amount of feed to be administered to the biomass stock. This output can also be combined with an automatic feeder, enabling the device to act independently of human surveillance. The referred device could be a laptop or a home desktop.

The main control device may also comprise a memory module, preferentially a hard drive. This stores all the required data, including the temperature and salinity values.

The main control device may also comprise an acquisition module that captures temperature and salinity values at a determined time, defined by the processing softwa re.

The main control device may also comprise a connection to the main public power source, with a rechargeable battery that can sustain the device even if the main power source fails.

The main control device may also comprise an interface module that allows an evolved man-machine interaction with parameters edition set up. Where the user can configure the timings for sensor readings and feedings, and modulate the stock biomass.

The system may also be characterized by software after the release of abiotic parameters via integration of sensors (must and salinity), together with the biomass released by the operator handles the great load and power to that reported when the operator and communicating with the feeders.

The system may also have communication capability in series and wirelessly to the management software (computational information system.

The system may also have the ability of computational information system, communicating to the load feeders designed for models based on RS232C serial communications; USB; and wireless communications; Bluetooth; Ethernet; Zigbee and SIGfox.

The method of operating the system for control and projection of fish feed by the programmable automation may comprise the following steps:

Data on Abiotic parameters (temperature and salinity) in each specific fish pond segment is captured automatically in the system. Current biomass is automatically predicted by the software, by applying a growth index to the fish initial stock described in tables 1 and 2.

The operator informs the system of the existing biomass load of the pond in question;

The system integrates and processes all the data collected to determine the correct feed dosage. The feeders are then automatically adjusted to predicted feed dosage and activate the feeding process. An operation log is stored in the system.

Disclosed is an autonomous aquaculture fish weight prediction system for feeding fish in a fish pond according to claim 1.

In an embodiment, the electronic data processor is configured for calculating the fish weight prediction model of a specific fish species.

In an embodiment, the electronic data processor is configured for calculating the fish weight prediction model, for each prediction model segment, by:

accumulating weight gained into an accumulated total weight, wherein the weight gained is calculated from the energy used at each prediction period,
calculating the energy used from the accumulated total feeding intake;
accumulating feeding intake into accumulated total feeding intake, wherein the feeding intake is calculated from the total weight, a temperature factor and a salinity factor.

In an embodiment, the temperature factor is calculated, for each prediction period, from:

$$F_{temp} = if\ (Temp \le T_{opt})\ then\ (exp(-2.3 \times (\frac{Temp - Topt}{(Tmin - Topt)^2})))$$

$$else(exp(-2.3 \times (\frac{Temp - Topt}{(Tmax - Topt)^2}))\ ,$$

wherein Temp is the measured temperature for each prediction period, $T_{opt}$ is the optimal temperature for growth of the specific fish species in the pond, $T_{min}$ is the minimum temperature for growth of the specific fish species in the pond, $T_{max}$ is the maximum temperature for growth of the specific fish species in the pond.

In an embodiment, the salinity factor is calculated, for each prediction period, from:

$$F_{sal} = if\ (Sal \le S_{opt})\ then\ (exp(-2.3\ (\frac{Sal - Sopt}{(Smin - Sopt)^2})))$$

$$else(exp(-2.3 \times (\frac{Sal - Sopt}{(Smax - Sopt)^2}))\ ,$$

wherein Sal is the measured salinity for each prediction period, $S_{opt}$ is the optimal salinity for growth of the specific fish species in the pond, $S_{min}$ is the minimum salinity for growth of the specific fish species in the pond, $S_{max}$ is the maximum salinity for growth of the specific fish species in the pond.

In an embodiment, the feeding intake is calculated, for each prediction period, from:

$$Intake = ((0.074) \times Weight_{total}) \times F_{temp} \times F_{sal}\ ,$$

wherein, for each prediction period, $F_{temp}$ is the temperature factor and $F_{sal}$ is the salinity factor for each prediction period, and $Weight_{total}$ is the accumulated total weight.

In an embodiment, the energy used is calculated, for each prediction period, from:

$$Energy_{used} = Total\ Feeding\ Intake \times 0.70,$$

wherein Total Feeding Intake is the accumulated total feeding intake for each prediction period.

In an embodiment, said weight gained is calculated, for each prediction period, from:

$$\text{Weight}_{gained} = \left(\frac{EnergyUsed}{0.01090}\right)^{\left(\frac{1}{2.98}\right)},$$

wherein Energy Used is the energy used for each prediction period.

In an embodiment, said numerical parameters are configurable according specific fish species being predicted.

In an embodiment, the autonomous aquaculture fish feeding system is for seabass *Dicentrarchus labrax.*

In an embodiment, said predetermined water pond depth ranges are not overlapping.

In an embodiment, said predetermined water pond depth ranges are contiguous.

In an embodiment, each prediction model segment, for each of the predetermined pond water depth ranges, is further segmented into volumes having a constant vertical section along the corresponding depth range, in particular said volumes being parallelepipedic.

In an embodiment, each prediction model segment is bootstrapped with the initial fish weigh for each of the pond water depth ranges.

In an embodiment, said temperature and salinity sensors are arranged in sensor pairs of temperature and salinity, each pair being arranged along different depths of a plunger, in particular a plunger cable or plunger rod.

In an embodiment, the electronic data processor is further configured for operating the autonomous vessel along a pond area-covering path.

In an embodiment, said pond area-covering path is a rectangular spiral path.

In an embodiment, the autonomous vessel is a floatable autonomous vessel.

In an embodiment, the electronic data processor is further configured for operating an automatic feeder with a feed amount equal to the calculated intake at each prediction period by the fish weight prediction model.

An embodiment further comprises a data display and wherein the electronic data processor is further configured for displaying, at said data display, the feed amount equal to the calculated intake at each prediction period by the fish weight prediction model.

It is also disclosed Non-transitory storage media including program instructions for implementing an autonomous aquaculture fish feeding system, the program instructions including instructions executable to carry out any of the operation methods disclosed.

**Brief Description of the Drawings**

The following figures provide preferred embodiments for illustrating the description and should not be seen as limiting the scope of invention.

**Figure 1:** Schematic representation of an embodiment having the application of the predictive and autonomous set.

**Figure 2:** Conceptual diagram of the model. TFI = Total Feeding Intake. Dashed lines represent external (Temp and Sal) and initial (Weight initial) conditions inputted into the model, where forcing function (21), equation (22), parameter (23) and state variable (24) are represented.

**Figure 3:** Results for Seabass Dicentrarchus labrax feeding intake in different temperature levels per salinity gradient.

**Figure 4:** Results for Seabass Dicentrarchus labrax feeding intake in different salinity levels per temperature gradient.

**Figure 5:** Results for Seabass Dicentrarchus labrax feeding intake in a random generated sequence of values of temperature and salinity during 30 days.

**Figure 6:** Screenshots of the software developed.

**Figure 7:** Schematic representation of an embodiment having the floatable vessel course (73) in a square spiral form and the vessel (71) having the multiple depth sensor (72).

**Detailed Description**

For the elaboration of the mathematical model of the disclosure, it was evaluated the effects of temperature and salinity variations in seabass food consumption over 6 months. Oscillations of temperature and salinity were made weekly.

The sensitivity analysis was calculated for variations of $\pm10\%$ on each parameter:

$$Y'_{X_i} = \frac{\partial Y}{\partial X_i}$$

Where $Y'$ is the sensitivity of the model outputs to variations on parameters ($Xi$). The variation of each parameter and, the resulting response of the model, were calculated with all other parameters fixed according to OAT (on-at-a-time) approach.

The model was written in STELLA 5.0 software and uses a time step of one day for a simulation time of 30 days. Using the information available in the literature, it was created a conceptual diagram of the model, where the temperature and salinity affects *D. labrax* intake (Figure 2).

Parameters values and the equations describing the European *seabass Dicentrarchus labrax* growth and feed consumption are described in tables 1 and 2 respectively.

The total fish weight is estimated according to the growth index equation described in table 2.

The prediction model is stratified along depths (segmented) according to the temperature and salinity data received at predetermined depths.

The temperature and salinity for each depth can be averaged to provide a single point for the predictive model.

Alternatively, the collected temperatures and salinity at each depth stratum may be further segmented into 3D volumes which can then be fed, each said volume as a single point, into the predictive model.

Thus, the pond is divided into 2 or more (n) depth strata (segments) each for a depth range. Alternatively, a pond may be divided into 2 or more depth strata each for a depth range and each said depth stratum may be further divided into parallelepipedic volumes (segments). Preferably, these segments are then arranged in a grid of rows and columns for a given depth stratum.

According to the disclosure, each mentioned segment is sampled for temperature and salinity and then a more accurate average is calculated for the whole pond. The segment predictive model should take into account the vertical distribution of temperature and salinity.

**Table 1:** Elements of the model and their respective values, symbols, description, units and their estimation method and initial values that are used in the model, using D. labrax as an embodiment.

| Type | Symbol | Description | Units | Used value |
|---|---|---|---|---|
| Equation | $F_{temp}$ | Equation of dependency of consumption on water temperature | Non-dimensional | Variable |
| Equation | $F_{sal}$ | Equation of the dependency of consumption on water salinity | Non-dimensional | Variable |
| Forcing function | Temp | Daily variation of water temperature | $\underline{o}$C | Variable |
| Forcing function | Sal | Daily variation of water salinity | psu | Variable |
| Parameter | $Energy_{used}$ | Percentage of consumed energy that is absorbed by *D. labrax* | %g / day | 0.70 |
| Parameter | *Intake* | Amount of ration that will be consumed by *D. labrax* | g / day | Variable |
| Parameter | $S_{max}$ | Maximum salinity for *D. labrax* growth | psu | 33 |
| Parameter | $S_{min}$ | Minimum salinity for *D. labrax* growth | psu | 5 |
| Parameter | $S_{opt}$ | Optimal salinity for *D. labrax* growth | psu | 27.5 |

(continued)

| Type | Symbol | Description | Units | Used value |
|------|--------|-------------|-------|------------|
| Parameter | $T_{max}$ | Maximum temperature for *D. labrax* growth | $^{o}$C | 35.95 |
| Parameter | $T_{min}$ | Minimum temperature for *D. labrax* growth | $^{o}$C | 4.10 |
| Parameter | $T_{opt}$ | Optimal temperature for *D. labrax* growth | $^{o}$C | 25 |
| Parameter | *Weight* $_{gained}$ | Weight gained by *D. labrax* | g | Variable |
| Parameter | *Weight* $_{initial}$ | Initial weight of *D. labrax* | g | Variable |
| Parameter | *Weight* $_{total}$ | Sum of the gained and the initial weight of *D. labrax* | g | Variable |
| State variable | TFI | Total feeding intake of *D. labrax* | g | Variable |

**Table 2:** Equations used in the model of the consumption rate with European seabass *Dicentrarchus labrax* in captivity as an embodiment.

| **TFI** | | |
|---|---|---|
| $$TFI(t) = (TFI(t- \delta t) + Intake) \times \delta t$$ | | Total feeding intake and Intake per unit of time. |

*Inflows:*

- $$Intake = ((0.074) \times Weight_{total}) \times F_{temp} \times F_{sal}$$

- $$Energy_{used} = TFI \times 0.70$$

- $$Weight_{total} = Weight_{gained} + Weight_{initial}$$

- $$Weight_{gained} = \left(\frac{Energy used}{0.01090}\right)^{\left(\frac{1}{2.98}\right)}$$

| **Temperature** | | |
|---|---|---|
| $$F_{temp} = if\ (Temp \leq T_{opt})\ then\ (exp(-2.3 \times (\ (\frac{Temp-Topt}{(Tmin-Topt)^2}))$$ $$else(exp(-2.3 \times (\ (\frac{Temp-Topt}{(Tmax-Topt)^2}))$$ | | Equation for the limit factor of temperature. |

| **Salinity** | | |
|---|---|---|
| $$F_{sal} = if\ (Sal \leq S_{opt})\ then\ (exp(-2.3\ (\ (\frac{Sal-Sopt}{(Smin-Sopt)^2}))$$ $$else(exp(-2.3 \times (\ (\frac{Sal-Sopt}{(Smax-Sopt)^2}))$$ | | Equation for the limit factor of salinity. |

Sensitivity analysis showed that Smax and Topt were the most sensitive parameters (Table 3).

Table 3: Sensitivity of the Total Feeding Intake (**TFI**) to $\pm 10\%$ variations of the parameters used on the feeding intake model of the seabass *Dicentrarchus labrax.*

| Parameter | -10% | Base simulation | +10% | Sensitivity |
|---|---|---|---|---|
| *Energy used* | 0.63 | 0.70 | 0.77 | 0.21 |
| *Smax* | 29.7 | 33 | 36.3 | 1.69 |
| *Smin* | 4.5 | 5 | 5.5 | -0.17 |
| *Sopt* | 24.75 | 27.5 | 30.25 | -0.08 |
| *Tmax* | 32.355 | 35.95 | 39.545 | 0.15 |
| *Tmin* | 3.69 | 4.10 | 4.51 | -0.14 |
| *Topt* | 22.5 | 25 | 27.5 | -0.88 |

The model was putted under trial and the results indicated that the model was capable of predicting the ration consumption of the *D. labrax* according to the oscillations in the water temperature and salinity. The predictions ranged from 0.7 to 1.71 g of ration per fish/day. The model also revealed that *D. labrax* increases its ration consumption in different rates according to the water temperature and salinity, with a slight increase in colder temperatures and a significant rise at warmer waters, leading to a consumption of 26.6 g of ration in 30 days at 21 ºC and 28 psu (Figure 2).

The model is capable of dealing with a random sequence of temperature and salinity values. As an example, a sequence of numbers were randomly generated ranging from 12 to 28ºC and 1 to 35 psu, and it can be predicted the feed intake in wet weight (g) for the example length, 30 days in this case.

The model outputs revealed that the seabass grows faster and eats more ration in warmer waters and at intermediary levels of salinity. Given that most of seabass rearing takes place in systems where the water temperature and salinity are not fully controlled, the ration consumption ought to vary according to the climatic conditions. Therefore, the present model gives an important insight of the needed ration amount to be offered to fish daily, minimizing the ration waste and potentially increasing the aquaculture profitability.

The main device constitutes a base for both predictive model, parameters reception and average calculation, and result (feed prediction) output. This output could either be exposed to the user or communicated to an automatic feeder.

The whole software that is included in the present disclosure, especially the mathematical model, can run in a low requirement computer. The main requisites in hardware are: 2GB RAM memory and a 20GB memory hard drive. The operative system should be the Microsoft Windows 7 or superior version. While the languages used are XAML language, with a resort to NCalc - Mathematical Expressions Evaluator for .NET.

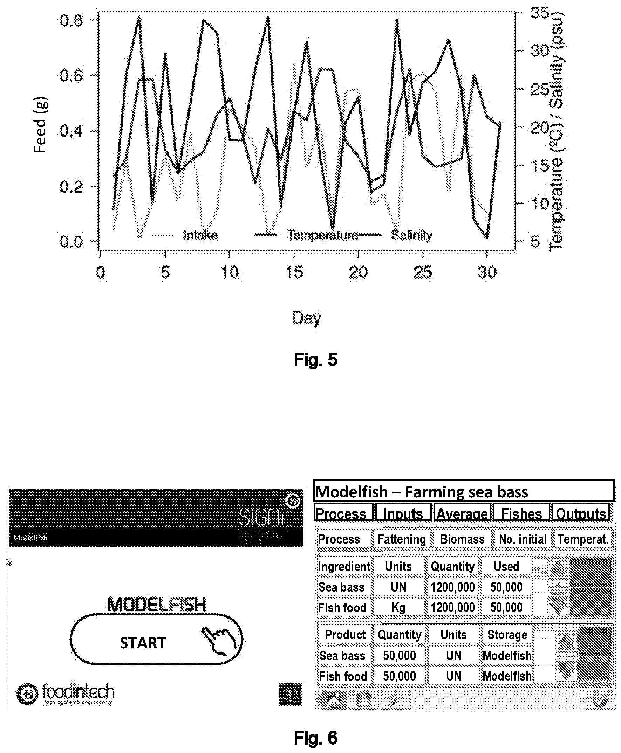

The model developed was integrated in a user friendly software (Figure 6).

It is an aim of the disclosure at the level of the model itself as well as the software in order to increase the accuracy of the predictions as well as a simpler and straightforward software product that can be easily operated by fish farmers.

The disclosure encompasses a specific trajectory, adaptable to any autonomous floatable vessel, if certain requirements are fulfilled. The circuit can vary depending on the pond dimensions. The vessel positioning may rely on GPS and sonar detection technologies to run its trajectory. Its path should preferably obey determined distances to ensure the best parameters collection.

To guarantee a similar data pattern collection, the vessel should preferably fulfill the same frequency of data collections (0.5 Hz), considering a 6-12 knots speed.

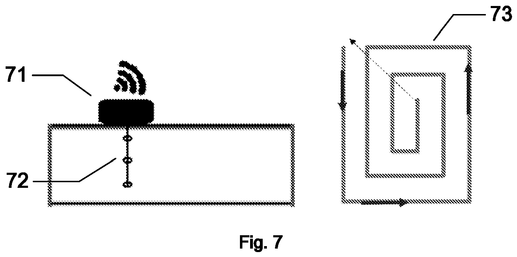

The circuit should preferably rely on a square spiral route (Figure 7), with parallel sequences distancing a minimal of 2 meters and maximum of 3 between each other. This way, the pond course can surpass the thermocline and halocline detected in previous works (Dill 1993, Allan, Heasman et al. 2008, Garcia, Sendra et al. 2011), ensuring a minimal distance focused on overcoming stratification pattern. The circuit software memorizes passed coordinates, allowing it to detect the near center (< 2m from proximate parallel) and returns to starting point.

The floatable structure can vary, as long as it can support the programmable automaton, as well as the antenna and sensors displacement. Due to the basal requirements, a correct operation should comprise:

A minimal 20 litter fiberglass hull volume.
Two propellers with 2.4-kilogram force trust power, with attached rudder.
Running at 12 volts and 2 amperes current.

Above the main hull should be a protected compartment for the main printed circuit board (PCB) and 30 000 milliampere. hour battery. Above this, a transmitting antenna with 40 cm length, 1w power with a 2.4GHz communication frequency. Allowing both remote control reception as data communication to software application.

Data collection is based on a durable 4 cm diameter PVC cable. Sensors are attached to the polyvinyl chloride (PVC) cable at variable lengths, so it can be adjusted to different depths and stratifications patterns. Oxygen sensor is optic fiber technology, allowing minimal calibration procedures. Temperature sensor is a waterproof high precision probe, runs at 9 to 12-bit (configurable) readings over a 1-Wire interface, also it allows a large temperature working range (-55°C to+125°C). The salinity sensor has a detection range of 0 to 50 ppt, uses conductance measurement and has auto-temperature compensation. All sensors are within a sealed PVC cylinder for better hydrodynamics, protection and custom placement.

The main PCB has a microprocessor and a zigbee module, these allow coordination control, sensor reading and communication with application. The main application is called SIGAi, this has been developed and patented by the present consortium. This application was developed in 'C#', 'dot.net' and 'NCalc - Mathematical Expressions Evaluator for .NET'. The requirements for its use are very low (Wi-fi connection, 2 Gb RAM, >20 Gb memory). This allows the use of a portable device, such as a tablet.

The software application control the floatable device e a 2D coordination axis, allowing a wide coverage within the entire fish pond for better data capture, all via Zigbee communication. The predictive model of feed consumption is embedded in the software application. The software application receives the parameter values at a continuous communication from the start and stop commands made by the user in the software application. At the end (stop command) the application calculates the average temperature and salinity and sends this values to the mathematical model, which immediately outputs to the user a dosage for the correct feeding, according to the algorithm prediction.

In a technological perspective, the invention is a method and appropriate technological system to optimize the food load considering variables fish growth ecosystem. The integrated system developed preferably considers the following integrated technological components:

Sensors (temperature, salinity) - This component of the system allows to measure certain variables from among fish growth, considering the temperature and
salinity. This would be placed at predetermined distance (<1 meter) from each other.
Communication of variables - This component is associated to communication of the variables (temperature, salinity) to the Data taker. The Communication of the variables can be: via wireless technologies (Zigbee).
Data taker - This technological component of the system has the functionality to receive the values of the variables concerned, the respective storage of data and
making them available to the management software. This includes distance values, temperature and salinity.
System unit management information - This component acts as a global information system of the aquaculture unit operations. The characteristic relevant to the above is the fact that this system uses a mathematical model to determine the optimal feed load to be delivered to fish stock. The model are built into the system in an own interface, with the ability to receive the variables from data taker. This system unit supports the processing and respective model output,
informing the user and inducing action to be carried out by the feeding automaton, according to the result of processing models.
Predictive model - The Predictive model consist of developed algorithms that predict changes in food consumption of fish at different environmental conditions (i.e. temperature, salinity), dynamically self-adjusting the amount of feed to be distributed. These mathematical models are embedded in the information system for its incorporation into the source code of the Information System.
Coordination module - It is within the main device that trajectory is calculated and transmitted to the vessel. This analyses the GPS coordinates received by the vessel, analyses and sends back a trajectory decision.
Communication output - This component supports the transmission of the result (trajectory to vessel and feed dosage to software interface and/or autonomous feeder) to the automaton that controls the feeder. This communication may be realized via wireless technologies (Zigbee).

Altogether, the predictive model and the hardware set of the present disclosure, combine a technological package capable of supporting fish farmers to reduce feed waste, production costs and increasing fish performance and quality. While the hardware sensors recovers information regarding the environment (temperature and salinity), the communication devices take this information to be processed by information management, where the predictive model reacts. This produces an output communication to the user feeder, authorizing this user to deliver the precise amount of feed to the fish stock. This set of devices can play an important role in both aquaculture production, environment care and research lines.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams do not depict any particular means, rather the flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof. The above described embodiments are combinable. The scope of protection of the current invention is defined by the appended claims.

**Claims**

1. Autonomous aquaculture fish weight prediction system for feeding fish in a fish pond, comprising:

   an autonomous vessel having a plurality of temperature and salinity sensors for two or more predetermined pond water depth ranges;
   an electronic data processor configured for calculating a fish weight prediction model from collected temperature and salinity data from said temperature and salinity sensors;
   wherein said fish weight prediction model is segmented into one or more prediction model segments for each of the predetermined pond water depth ranges;
   wherein the electronic data processor is configured for calculating each fish weight prediction model segment from collected temperature and salinity data from the corresponding predetermined pond water depth range.

2. Autonomous aquaculture fish weight prediction system for feeding fish in a fish pond according to the previous claim, wherein the electronic data processor is configured for calculating the fish weight prediction model, for each prediction model segment, by:

   accumulating weight gained into an accumulated total weight, wherein the weight gained is calculated from the energy used at each prediction period,
   calculating the energy used from the accumulated total feeding intake;
   accumulating feeding intake into accumulated total feeding intake, wherein the feeding intake is calculated from the total weight, a temperature factor and a salinity factor.

3. Autonomous aquaculture fish weight prediction system for feeding fish in a fish pond according to claim 2, wherein the temperature factor is calculated, for a prediction period, from:

$$F_{temp}=if\ (Temp \leq T_{opt})\ then\ (exp(\text{-}2.3 \times (\ (\frac{Temp-Topt}{(Tmin-Topt)^2}))$$

$$else(exp(\text{-}2.3 \times (\ (\frac{Temp-Topt}{(Tmax-Topt)^2})) \ ,$$

wherein Temp is the measured temperature for each prediction period, $T_{opt}$ is the optimal temperature for growth of the specific fish species in the pond, $T_{min}$ is the minimum temperature for growth of the specific fish species in

the pond, $T_{max}$ is the maximum temperature for growth of the specific fish species in the pond.

4. Autonomous aquaculture fish weight prediction system for feeding fish in a fish pond according to claim 2, wherein the salinity factor is calculated, for a prediction period, from:

$$F_{sal} = if\ (Sal \leq S_{opt})\ then\ (exp(-2.3\ (\ (\frac{Sal-Sopt}{(Smin-Sopt)^2})))$$

$$else(exp(-2.3 \times (\ (\frac{Sal-Sopt}{(Smax-Sopt)^2}))\ ,$$

wherein Sal is the measured salinity for each prediction period, $S_{opt}$ is the optimal salinity for growth of the specific fish species in the pond, $S_{min}$ is the minimum salinity for growth of the specific fish species in the pond, $S_{max}$ is the maximum salinity for growth of the specific fish species in the pond.

5. Autonomous aquaculture fish weight prediction system for feeding fish in a fish pond according to claim 2, wherein the feeding intake is calculated, for a prediction period, from:

$$Intake = ((0.074) \times Weight_{total}) \times F_{temp} \times F_{sal}\ ,$$

wherein, for each prediction period, $F_{temp}$ is the temperature factor and $F_{sal}$ is the salinity factor for each prediction period, and $Weight_{total}$ is the accumulated total weight.

6. Autonomous aquaculture fish weight prediction system for feeding fish in a fish pond according to claim 2, wherein the energy used is calculated, for a prediction period, from:

$$Energy_{used} = Total\ Feeding\ Intake \times 0.70,$$

wherein Total Feeding Intake is the accumulated total feeding intake for each prediction period.

7. Autonomous aquaculture fish weight prediction system for feeding fish in a fish pond according to claim 2, wherein said weight gained is calculated, for a prediction period, from:

$$Weight_{gained} = \left(\frac{EnergyUsed}{0.01090}\right)^{\left(\frac{1}{2.98}\right)}\ ,$$

wherein Energy Used is the energy used for each prediction period.

8. Autonomous aquaculture fish weight prediction system for feeding fish in a fish pond according to any of the previous claims, wherein the electronic data processor is configured for calculating the fish weight prediction model of a specific fish species.

9. Autonomous aquaculture fish weight prediction system for feeding fish in a fish pond according to any of the previous claims, wherein said predetermined pond water depth ranges are not overlapping.

10. Autonomous aquaculture fish weight prediction system for feeding fish in a fish pond according to the previous claim, wherein said predetermined pond water depth ranges are contiguous.

11. Autonomous aquaculture fish weight prediction system for feeding fish in a fish pond according to any of the previous claims, wherein said temperature and salinity sensors are arranged in sensor pairs of temperature and salinity, each pair being arranged along different depths of a plunger, in particular a plunger cable or plunger rod.

12. Autonomous aquaculture fish weight prediction system for feeding fish in a fish pond according to any of the previous claims, wherein the electronic data processor is further configured for operating the autonomous vessel along a pond area-covering path.

13. Autonomous aquaculture fish weight prediction system for feeding fish in a fish pond according to any of the previous claims, wherein the autonomous vessel is a floatable autonomous vessel.

14. Autonomous aquaculture fish weight prediction system for feeding fish in a fish pond according to any of the previous claims, wherein the electronic data processor is further configured for operating an automatic feeder with a feed amount equal to the calculated intake at a prediction period by the fish weight prediction model.

**Patentansprüche**

1. Autonomes Vorhersagesystem für die Gewichtszunahme von Fischen in einer Aquakultur zur Fütterung von Fischen in einem Fischteich, umfassend:

   ein autonomes Wasserfahrzeug, umfassend eine Vielzahl von Temperatur- und Salzgehalt-Sensoren für zwei oder mehr vorgegebene Tiefenbereiche des Teichwassers;
   einen elektronischen Datenprozessor, der so konfiguriert ist, dass er aus den von den genannten Temperatur- und Salzgehalt-Sensoren erfassten Temperatur- und Salzgehaltsdaten ein Modell für die Gewichtszunahme der Fische berechnet;
   wobei das genannte Vorhersagemodell für die Gewichtszunahme der Fische in ein oder mehrere Segmente eines Vorhersagemodells für jeden der vorgegebenen Tiefenbereiche des Teichwassers unterteilt ist;
   wobei der elektronische Datenprozessor so konfiguriert ist, dass er jedes Segment des Vorhersagemodells für die Gewichtszunahme der Fische aus den gesammelten Temperatur- und Salzgehaltsdaten aus dem entsprechenden vorbestimmten Tiefenbereich des Teichwassers berechnet.

2. Autonomes Vorhersagesystem für die Gewichtszunahme von Fischen in einer Aquakultur zur Fütterung von Fischen in einem Fischteich nach dem vorangehend Anspruch, wobei der elektronische Datenprozessor so konfiguriert ist, dass er jedes Segment des Vorhersagemodells für das Vorhersagemodell für die Gewichtszunahme der Fische berechnet durch:

   Akkumulation der Gewichtszunahme zu einem akkumulierten Gesamtgewicht, wobei die Gewichtszunahme aus der in jedem Vorhersagezeitraum verbrauchten Energie berechnet wird,
   Berechnung der verbrauchten Energie aus der akkumulierten Gesamtfutteraufnahme;
   Akkumulation der Futteraufnahme zu einer akkumulierten Gesamtfutteraufnahme, wobei die Futteraufnahme aus dem Gesamtgewicht, einem Temperaturfaktor und einem Salzgehaltsfaktor berechnet wird.

3. Autonomes Vorhersagesystem für die Gewichtszunahme von Fischen in einer Aquakultur zur Fütterung von Fischen in einem Fischteich nach Anspruch 2, wobei der Temperaturfaktor für einen Vorhersagezeitraum berechnet wird aus:

$$F_{temp} = wenn(Temp \leq T_{opt}) \, dann \, (\exp(-2{,}3 \, X \, ((\frac{Temp - Topt}{Tmin - Topt)2})))$$

$$sonst(\exp(-2{,}3 \, X \, ((\frac{Temp - Topt}{Tmax - Topt)2}))) \quad ,$$

wobei Temp die gemessene Temperatur für jeden Vorhersagezeitraum ist, $T_{opt}$ die optimale Temperatur für das Wachstum der spezifischen Fischart in dem Teich ist, $T_{min}$ die Mindesttemperatur für das Wachstum der spezifischen Fischart in dem Teich ist, $T_{max}$ die Höchsttemperatur für das Wachstum der spezifischen Fischart in dem Teich ist.

4. Autonomes Vorhersagesystem für die Gewichtszunahme von Fischen in einer Aquakultur zur Fütterung von Fischen in einem Fischteich nach Anspruch 2, wobei der Salzgehaltsfaktor für einen Vorhersagezeitraum berechnet wird aus:

$$F_{sal} = wenn\ (Sal \leq S_{opt})\ dann\ (\exp(-2,3\ X\ ((\frac{Sal - Sopt}{Smin - Sopt)2})))$$

$$sonst(\exp(-2,3\ X\ ((\frac{Sal - Sopt}{Smax - Sopt)2}))) \quad ,$$

wobei Sal der gemessene Salzgehalt für jeden Vorhersagezeitraum ist, $S_{opt}$ der optimale Salzgehalt für das Wachstum der spezifischen Fischart in dem Teich ist, $S_{min}$ der minimale Salzgehalt für das Wachstum der spezifischen Fischart in dem Teich ist, $S_{max}$ der maximale Salzgehalt für das Wachstum der spezifischen Fischart in dem Teich ist.

5. Autonomes Vorhersagesystem für die Gewichtszunahme von Fischen in einer Aquakultur zur Fütterung von Fischen in einem Fischteich nach Anspruch 2, wobei die Futteraufnahme für einen Vorhersagezeitraum berechnet wird aus:

Aufnahme = ((0,074) x $Gewicht_{gesamt}$ x $F_{temp}$ x $F_{sal,}$

wobei für jeden Vorhersagezeitraum $F_{temp}$ der Temperaturfaktor und $F_{sal}$ der Salzgehaltsfaktor für jeden Vorhersagezeitraum ist und $Gewicht_{gesamt}$ das kumulierte Gesamtgewicht ist.

6. Autonomes Vorhersagesystem für die Gewichtszunahme von Fischen in einer Aquakultur zur Fütterung von Fischen in einem Fischteich nach Anspruch 2, wobei die verbrauchte Energie für einen Vorhersagezeitraum berechnet wird aus:

$Energie_{verbraucht}$ = Gesamtfutteraufnahme x 0,70,

wobei Gesamtfutteraufnahme die kumulierte Gesamtfutteraufnahme für jeden Vorhersagezeitraum ist.

7. Autonomes Vorhersagesystem für die Gewichtszunahme von Fischen in einer Aquakultur zur Fütterung von Fischen in einem Fischteich nach Anspruch 2, wobei die genannte Gewichtszunahme für eine Vorhersagezeitraum berechnet wird aus:

$$Gewicht_{Zunahme} = \left(\frac{Verbrauchte\ Energie}{0,01090}\right)^{(\frac{1}{2,98})} \quad ,$$

wobei Verbrauchte Energie die für jeden Vorhersagezeitraum verbrauchte Energie ist.

8. Autonomes Vorhersagesystem für die Gewichtszunahme von Fischen in einer Aquakultur zur Fütterung von Fischen in einem Fischteich nach einem der vorangehend Ansprüche, wobei der elektronische Datenprozessor so konfiguriert ist, dass er das Vorhersagemodell für die Gewichtszunahme der Fische einer bestimmten Fischart berechnet.

9. Autonomes Vorhersagesystem für die Gewichtszunahme von Fischen in einer Aquakultur zur Fütterung von Fischen in einem Fischteich nach einem der vorangehend Ansprüche, wobei sich die genannten vorgegebenen Tiefenbereiche des Teichwasser nicht überschneiden.

10. Autonomes Vorhersagesystem für die Gewichtszunahme von Fischen in einer Aquakultur zur Fütterung von Fischen in einem Fischteich nach dem vorangehend Anspruch, wobei die genannten vorgegebenen Tiefenbereiche des Teichwassers zusammenhängend sind.

11. Autonomes Vorhersagesystem für die Gewichtszunahme von Fischen in einer Aquakultur zur Fütterung von Fischen in einem Fischteich nach einem der vorangehend Ansprüche, wobei die genannten Temperatur- und Salzgehaltssensoren in Sensorpaaren für Temperatur und Salzgehalt angeordnet sind, wobei jedes Paar entlang unterschiedlicher Tiefen eines Tauchkolbens, insbesondere eines Tauchkabels oder einer Tauchkolbenstange, angeordnet ist.

**12.** Autonomes Vorhersagesystem für die Gewichtszunahme von Fischen in einer Aquakultur zur Fütterung von Fischen in einem Fischteich nach einem der vorangehend Ansprüche, wobei der elektronische Datenprozessor ferner so konfiguriert ist, dass er das autonome Wasserfahrzeug entlang einer Bahn betreibt, die den Bereich des Fischteichs abdeckt.

**13.** Autonomes Vorhersagesystem für die Gewichtszunahme von Fischen in einer Aquakultur zur Fütterung von Fischen in einem Fischteich nach einem der vorangehend Ansprüche, wobei das autonome Wasserfahrzeug ein schwimmfähiges autonomes Wasserfahrzeug ist.

**14.** Autonomes Vorhersagesystem für die Gewichtszunahme von Fischen in einer Aquakultur zur Fütterung von Fischen in einem Fischteich nach einem der vorangehend Ansprüche, wobei der elektronische Datenprozessor ferner so konfiguriert ist, dass er eine automatische Fütterungsanlage mit einer Futtermenge betreibt, die der durch das Vorhersagemodell für die Gewichtszunahme der Fische berechneten Aufnahme in einem Vorhersagezeitraum entspricht.

**Revendications**

**1.** Système autonome de prédiction de poids de poissons d'aquaculture pour alimenter des poissons dans un vivier, comprenant :

un récipient autonome disposant d'une pluralité de capteurs de température et de salinité pour deux ou plus de gammes de profondeur d'eau de vivier prédéterminées ;
un traiteur de données électronique configuré pour calculer un modèle de prédiction de poids de poissons à partir des données de température et salinité recueillies par lesdits capteurs de température et salinité ;
dans lequel ledit modèle de prédiction de poids de poissons est segmenté en un ou plusieurs segments de modèle de prédiction pour chacune des gammes de profondeur d'eau de vivier prédéterminées ;
dans lequel le traiteur de données électronique est configuré pour calculer chaque segment de modèle de prédiction de poids de poissons à partir des données de température et salinité recueillies dans la gamme de profondeur d'eau de vivier prédéterminée correspondante.

**2.** Système autonome de prédiction de poids de poissons d'aquaculture pour alimenter des poissons dans un vivier selon la revendication précédente, dans lequel le traiteur de données électronique est configuré pour calculer le modèle de prédiction de poids de poissons, pour chaque segment de modèle de prédiction, en :

accumulant le poids pris à un poids total accumulé, dans lequel le poids pris est calculé à partir de l'énergie utilisée à chaque période de prédiction ,
calculant l'énergie utilisée à partir de la consommation d'aliments totale accumulée ;
accumulant la consommation d'aliments à la consommation d'aliments totale accumulée, dans laquelle la consommation d'aliments est calculée à partir du poids total, d'un facteur de température et d'un facteur de salinité.

**3.** Système autonome de prédiction de poids de poissons d'aquaculture pour alimenter des poissons dans un vivier selon la revendication 2, dans lequel le facteur de température est calculé pour une période de prédiction, à partir de :

$$F_{temp} = si\ (Temp \leq T_{opt})\ alors\ (\exp(-2{,}3\ X\ ((\frac{Temp - Topt}{Tmin - Topt)2})))$$

$$sinon(\exp(-2{,}3\ X\ ((\frac{Temp - Topt}{Tmax - Topt)2}))) ,$$

dans lequel Temp est la température mesurée pour chaque période de prédiction, $T_{opt}$ est la température optimale pour la croissance des espèces de poissons spécifiques dans le vivier, $T_{min}$ est la température minimale pour la croissance des espèces de poissons spécifiques dans le vivier, $T_{max}$ est la température maximale pour la croissance des espèces de poissons spécifiques dans le vivier.

**4.** Système autonome de prédiction de poids de poissons d'aquaculture pour alimenter des poissons dans un vivier selon la revendication 2, dans lequel le facteur de salinité est calculé pour une période de prédiction, à partir de :

$$F_{sal} = si \ (Sal \leq S_{opt}) \ alors \ (exp(-2,3 \ X \ ((\frac{Sal - Sopt}{Smin - Sopt)2}))$$

$$sinon(exp(-2,3 \ X \ ((\frac{Sal - Sopt}{Smax - Sopt)2})),$$

dans lequel Sal est la salinité mesurée pour chaque période de prédiction, $S_{opt}$ est la salinité optimale pour la croissance des espèces de poissons spécifiques dans le vivier, $S_{min}$ est la salinité minimale pour la croissance des espèces de poissons spécifiques dans le vivier, $S_{max}$ est la salinité maximale pour la croissance des espèces de poissons spécifiques dans le vivier.

**5.** Système autonome de prédiction de poids de poissons d'aquaculture pour alimenter des poissons dans un vivier selon la revendication 2, dans lequel la consommation d'aliments est calculée, pour une période de prédiction, à partir de :

$$Consommation = ((0,074) \ x \ Poids_{total}) \ x \ F_{temp} \ x \ F_{sal},$$

dans lequel, pour chaque période de prédiction, $F_{temp}$ est le facteur de température et $F_{sal}$ est le facteur de salinité pour chaque période de prédiction, et $Poids_{total}$ est le poids total accumulé.

**6.** Système autonome de prédiction de poids de poissons d'aquaculture pour alimenter des poissons dans un vivier selon la revendication 2, dans lequel l'énergie utilisée est calculée pour une période de prédiction, à partir de :

$$Énergie_{utilisée} = Consommation \ d'Aliments \ Totale \ x \ 0,70,$$

dans lequel la Consommation d'Aliments Totale est la consommation d'aliments totale accumulée pour chaque période de prédiction.

**7.** Système autonome de prédiction de poids de poissons d'aquaculture pour alimenter des poissons dans un vivier selon la revendication 2, dans lequel ledit poids pris est calculé, pour une période de prédiction, à partir de :

$$Poids_{pris} = \left(\frac{ÉnergieUtilisée}{0,01090}\right)^{(\frac{1}{2,98})},$$

dans lequel Énergie Utilisée est l'énergie utilisée pour chaque période de prédiction.

**8.** Système autonome de prédiction de poids de poissons d'aquaculture pour alimenter des poissons dans un vivier selon l'une quelconque des revendications précédentes, dans lequel le traiteur de données électronique est configuré pour calculer le modèle de prédiction de poids de poissons d'une espèce de poissons spécifique.

**9.** Système autonome de prédiction de poids de poissons d'aquaculture pour alimenter des poissons dans un vivier selon l'une quelconque des revendications précédentes, dans lequel lesdites gammes de profondeur d'eau de vivier prédéterminées ne se chevauchent pas.

**10.** Système autonome de prédiction de poids de poissons d'aquaculture pour alimenter des poissons dans un vivier selon la revendication précédente, dans lequel lesdites gammes de profondeur d'eau de vivier prédéterminées sont contigües.

**11.** Système autonome de prédiction de poids de poissons d'aquaculture pour alimenter des poissons dans un vivier selon l'une quelconque des revendications précédentes, dans lequel lesdits capteurs de température et salinité sont arrangés en paires de capteurs de température et salinité, chaque paire étant arrangée le long de différentes profondeurs d'un piston, un particulier un câble de piston ou une tige de piston.

**12.** Système autonome de prédiction de poids de poissons d'aquaculture pour alimenter des poissons dans un vivier selon l'une quelconque des revendications précédentes, dans lequel le traiteur de données électronique est également configuré pour faire fonctionner le récipient autonome le long d'un trajet couvrant une zone de vivier.

**13.** Système autonome de prédiction de poids de poissons d'aquaculture pour alimenter des poissons dans un vivier selon l'une quelconque des revendications précédentes, dans lequel le récipient autonome est un récipient autonome pouvant flotter.

**14.** Système autonome de prédiction de poids de poissons d'aquaculture pour alimenter des poissons dans un vivier selon l'une quelconque des revendications précédentes, dans lequel le traiteur de données électronique est également configuré pour faire fonctionner un dispositif d'alimentation automatique avec une quantité d'aliments égale à la consommation d'aliments calculée à une période de prédiction par le modèle de prédiction de poids de poissons.

**Fig. 1**

**Fig. 2**

Fig. 3

Fig. 4

Fig. 5

Fig. 6

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5133287 A
- US 6317385 B1
- US 8825241 B2
- WO 2016023071 A1

### Non-patent literature cited in the description

- **LEE et al.** *The Use of Vision in Sustainable Aquaculture Feeding System,* 2013
- **GARCIA ; SENDRA ; LLORET ; LLORET.** *Monitoring and control sensor system for fish feeding in marine fish farms,* 2011
- Development of industrial-scale inland saline aquaculture:. **ALLAN, G. L. ; HEASMAN, H. ; BENNISON, S.** Coordination and communication of R&D in Australia. NSW Department of Primary Industries, 2008
- **COVES, D. ; GASSET, E. ; LEMARIÉ, G. ; DUTTO, G.** A simple way of avoiding feed wastage in European seabass, Dicentrarchus labrax, under self-feeding conditions. *Aquatic Living Resources,* 1998, vol. 11 (6), 395-401
- **DENDRINOS, P. ; THORPE, J.** Effects of reduced salinity on growth and body composition in the European bass Dicentrarchus labrax (L.). *Aquaculture (Amsterdam, Netherlands),* 1985, vol. 49 (3), 333-358
- **DILL, W. A.** Inland fisheries of Europe. Food & Agriculture Org, 1993
- FAO Yearbook: Fishery Statistics - Capture Production. *European Aquaculture Production Report 2007-2015,* 2014, 45
- Commission on Geosciences, Environment, and Resources. **FISHERIES, S. M.** Ocean Studies Board. National Academy Press, 1999
- **GARCIA, M. ; SENDRA, S. ; LLORET, G. ; LLORET, J.** Monitoring and control sensor system for fish feeding in marine fish farms. *IET communications,* 2011, vol. 5 (12), 1682-1690
- **GAVINE, F. ; BRETHERTON, M.** Aquaculture in saline groundwater evaporation basins. *RI Research, Australien Government,* 2007, 1-44
- **LEE, J.-V. ; LOO, J.-L. ; CHUAH, Y.-D. ; TANG, P.-Y. ; TAN, Y.-C. ; GOH, W.-J.** The use of vision in a sustainable aquaculture feeding system. *Research Journal of Applied Sciences, Engineering and Technology,* 2013, vol. 6 (19), 3658-3669
- **NAYLOR, R. L. ; GOLDBURG, R. J. ; PRIMAVERA, J. H. ; KAUTSKY, N. ; BEVERIDGE, M. C. ; CLAY, J. ; TROELL, M.** Effect of aquaculture on world fish supplies. *Nature,* 2000, vol. 405 (6790), 1017-1024
- **PERSON-LE RUYET, J. ; MAHE, K. ; LE BAYON, N. ; LE DELLIOU, H.** Effects of temperature on growth and metabolism in a Mediterranean population of European sea bass, Dicentrarchus labrax. *Aquaculture (Amsterdam, Netherlands),* 2004, vol. 237 (1), 269-280
- **PRITCHARD, D. W.** Salinity distribution and circulation in the Chesapeake Bay estuarine system. *Journal of Marine Research,* 1952, vol. 11 (2), 106-123
- **RUSSELL, N. ; FISH, J. ; WOOTTON, R.** Feeding and growth of juvenile sea bass: the effect of ration and temperature on growth rate and efficiency. *Journal of Fish Biology,* 1996, vol. 49 (2), 206-220
- **THORPE, J. ; CHO, C. Y.** Minimising waste through bioenergetically and behaviourally based feeding strategies. *Water Science and Technology,* 1995, vol. 31 (10), 29-40